# EUROPEAN PATENT APPLICATION

(11) **EP 4 468 384 A1**
(43) Date of publication of application: **27.11.2024**
(21) Application number: 24170481.6
(22) Date of filing: 16.04.2024
(51) Int. Cl.: H01M 4/04, H01M 4/131, H01M 4/1391, H01M 4/36, H01M 4/485, H01M 4/505, H01M 4/525, H01M 10/0525, H01M 4/02

(54) **DOUBLE-COATED HIGH-NICKEL LITHIUM-ION CATHODE MATERIAL, PREPARATION METHOD THEREOF AND APPLICATION THEREOF**

(30) Priority: 26.04.2023 CN 202310465316
(71) Applicant: Guizhou Zhenhua E-CHEM Inc., Guiyang City, Guizhou 550014 (CN)
(72) Inventor: HUANG, Jin, Guiyang City, 550014 (CN); YU, Ye, Guiyang City, 550014 (CN); WANG, Lijuan, Guiyang City, 550014 (CN); ZHOU, Chaoyi, Guiyang City, 550014 (CN); XIANG, Qianxin, Guiyang City, 550014 (CN); DENG, Shiyun, Guiyang City, 550014 (CN); WEI, Jing, Guiyang City, 550014 (CN); WANG, Xianjin, Guiyang City, 550014 (CN)
(74) Representative: Dehns

(57) **Abstract**

The present invention relates to the field of lithium-ion batteries, and in particular, to a double-coated high-nickel lithium-ion cathode material, a preparation method thereof and an application thereof. The double-coated high-nickel lithium-ion cathode material includes a cathode material substrate, a first coating layer coated on a surface of the cathode material substrate, and a second coating layer coated on a surface of the first coating layer; wherein the first coating layer and the second coating layer are prepared by successively coating the cathode material substrate with a metal oxide and a boron-containing compound. The high-nickel cathode material for lithium-ion batteries of the present invention has a stable structure and interface, is relatively stable in the air, and is convenient for large-scale production. The prepared battery has low gas production and high safety.

## Description

### Technical Field

The present invention relates to the field of lithium-ion batteries, and in particular, to a double-coated high-nickel lithium-ion cathode material, a preparation method thereof and an application thereof, and a low-gas production and high-nickel lithium-ion battery prepared from the double-coated high-nickel lithium-ion cathode material.

### Background Art

With consumers' increasing demand for the endurance mileage of new energy vehicles, high-nickel ternary lithium batteries are becoming increasingly popular. By 2022, the proportion of high-nickel ternary lithium batteries loaded on vehicles was gradually higher than that of low-nickel ternary lithium batteries. High-nickel lithium-ion batteries (with a Ni mole fraction of ≥ 0.6) have become one of the important development directions in the future. On the one hand, the current high-nickel cathode materials mainly have a secondary spherical particle morphology, which has a relatively higher capacity than a single crystal particle morphology, but gas production is relatively serious due to a relatively low sintering temperature. On the other hand, high-nickel cathode materials are unstable in the air due to a high nickel content and also tend to cause relatively serious gas production after being prepared into batteries.

Chinese patent CN112349905A discloses a double-coated modified cathode material for lithium-ion batteries, comprising a cathode material substrate, a first coating layer coated on a surface of the substrate, and a second coating layer coated on a surface of the first coating layer, wherein the first coating layer is a nanosheet-shaped fast ion conductor layer; and the second coating layer is an Al compound layer. The patent discloses a double sintering process. In the coating process, the fast ion conductor is coated by adding a cathode material substrate to water and stirring to form a uniform slurry A; adding a tungsten ammonium salt, a molybdenum ammonium salt or a vanadium ammonium salt to water and stirring to form a uniform solution B; adding the solution B and a citric acid solution to the slurry A, stirring uniformly, and heating to evaporate water until a viscous gel appears; drying and dehydrating the gel to obtain a cathode material coated with a nanosheet-shaped fast ion conductor. The coating process is too complex, requires strict control of process parameters, and requires heating to evaporate water, which is difficult to industrialize and needs to improve the gas production performance. The substrate material has a secondary sphere morphology.

Chinese patent CN111628158A discloses a double-coated cathode material, comprising a cathode material, and a first coating layer and a second coating layer successively coated on the cathode material, wherein the cathode material comprises LiₐNiₓCo_{y}Mn_{1-x-y}O₂, where 0.3 < x <0.9, 0.1 < y <0.35, and 0.95 < a <1.03; the first coating layer and the second coating layer are different, the first coating layer being a LATP layer or a LNTO layer, and the second coating layer being a LNTO layer or a LATP layer. The patented process may only be applied to 9 series or less high-nickel materials, and the coating material is a fast ion conductor. The process uses double dry coating and double sintering, and the substrate material also has a secondary sphere morphology. Although the invention alleviates problems of rapid capacity decline and excessive side reactions during cycle processes compared with a single coating, the gas production performance still needs to be improved.

Chinese patent CN108807926A discloses a Co/B co-coated nickel-cobalt-manganese lithium-ion cathode material and a preparation method thereof. In this invention, the lithium-ion cathode material is doped with an appropriate amount of F/W during manufacture. The dope of a small amount of F⁻ ions and W⁶⁺ ions improves the cycle performance and safety performance because the F⁻ ions have a strong electronegativity, which can suppress the overflow of O²⁻ ions, stabilize the structural stability of the material, and functions as a skeleton, while the W⁶⁺ ions can improve the high-temperature cycle performance of the material. In addition, Co/B double coating is performed during double sintering of the invention, resulting in the cathode material coated with Co/B at a high voltage, which can effectively improve the cycle performance and electronic conductivity of batteries, reduce residual alkali and gas expansion, and reduce the occurrence of side reactions of the cathode material when contacting with an electrolyte. However, gas production performance still needs to be improved.

In addition, in order to solve the problem of gas production performance, most of the existing technologies use a process of washing with an inorganic or organic solvent and then coating and low-temperature sintering. The process is relatively simple, but the performance is also limited. Therefore, there are few companies with high-scale production capacity for nickel. Especially when a molar fraction of Ni is ≥ 0.9 and the free lithium is relatively high, it isn't easy to achieve a product with an excellent performance by the above simple process.

### Summary of the Invention

The technical problem to be solved by the present invention is to provide a double-coated high-nickel lithium-ion cathode material. The present invention improves the stability of cathode materials, reduces the gas production of high-nickel lithium-ion batteries, and improves the safety performance of high-nickel lithium-ion batteries.

The inventors have found through research that for a high-nickel cathode material with a nickel mole fraction of more than 0.8, the stability of the material may be significantly improved and the gas production performance of batteries may be reduced by using a combined process of wet and dry coating in which wet coating is performed after a strong acid is added to etch a surface during the wet process, and then a boron-containing fast ion conductor is coated by dry coating. In addition, the sintering temperature after wet coating is relatively high, which may stabilize the structure and interface, and the sintering temperature after dry coating is relatively low, which may inhibit side reactions of the material and electrolyte.

To solve the above problems, the present invention provides the following technical solutions.

The present invention provides a double-coated high-nickel cathode material for lithium-ion batteries, comprising a cathode material substrate, a first coating layer coated on a surface of the cathode material substrate, and a second coating layer coated on a surface of the first coating layer;
wherein the first coating layer and the second coating layer are prepared by successively coating the cathode material substrate with a metal oxide and a boron-containing compound.

In some embodiments of the present invention, the cathode material has a general chemical formula of LiₐNiₓCo_{y}Mn_{z}M_{b}O₂·cA·dB, where 1.00 ≤ a ≤ 1.20, 0.00 < b ≤ 0.01, 0.00 < c ≤ 0.01, 0.00 < d ≤ 0.05, 0.80 ≤ x < 1.00, 0.00 ≤ y < 0.12, 0.00 ≤ z < 0.2, and x + y + z = 1; M is a doping element which is one or a combination of two or more selected from the group consisting of Mg, Ti, Al, Zr, Ba and a rare earth element; A is the first coating layer, and B is the second coating layer.

In some embodiments of the present invention, in the above double-coated high-nickel cathode material for lithium-ion batteries, 1.00 ≤ a ≤ 1.20, 0.001 ≤ b ≤ 0.01, 0.80 ≤ x <1.00, 0.00 ≤ y <0.12, 0.00 ≤ z <0.2, 0.0005 < c ≤ 0.01, 0.001 < d ≤ 0.05, and x + y + z = 1; preferably, 1.02 ≤ a ≤ 1.20, 0.0015 ≤ b ≤ 0.005, 0.80 ≤ x <1.00, 0.00 ≤ y <0.12, 0.00 ≤ z <0.2, 0.0005 < c ≤ 0.01, 0.001 < d ≤ 0.03, and x + y + z = 1.

Preferably, in the above double-coated high-nickel cathode material for lithium-ion batteries, the rare earth element is one or a combination of two or more selected from the group consisting of lanthanum, cerium, praseodymium, neodymium, promethium, samarium, yttrium, gadolinium, terbium, dysprosium, holmium, erbium, thulium, ytterbium, lutetium, scandium or europium, preferably yttrium.

In some embodiments of the present invention, in the above double-coated high-nickel cathode material for lithium-ion batteries, the first coating layer is formed by wet coating a metal oxide; preferably, the metal oxide is one or a combination of two or more selected from the group consisting of Al₂O₃, TiO₂, ZrO₂, MgO and a rare earth oxide.

In some embodiments of the present invention, in the above double-coated high-nickel cathode material for lithium-ion batteries, the rare earth oxide is one or a combination of two or more selected from the group consisting of lanthanum oxide, cerium oxide, praseodymium oxide, neodymium oxide, promethium oxide, samarium oxide, yttrium oxide, gadolinium oxide, terbium oxide, dysprosium oxide, holmium oxide, erbium oxide, thulium oxide, ytterbium oxide, lutetium oxide, scandium oxide or europium oxide, preferably yttrium oxide.

In some embodiments of the present invention, in the above double-coated high-nickel cathode material for lithium-ion batteries, the second coating layer is formed by dry coating a boron-containing compound; preferably, the boron-containing compound is one or a combination of two or more selected from the group consisting of boric acid, lithium borate, lithium metaborate or lithium tetraborate.

In some embodiments of the present invention, in the above double-coated high-nickel cathode material for lithium-ion batteries, the cathode material has a primary particle morphology or a small number of morphology agglomerated from primary particles.

In some embodiments of the present invention, in the above double-coated high-nickel cathode material for lithium-ion batteries, the cathode material, based on a mass of the cathode material, comprises < 2000 ppm of total free lithium.

In some embodiments of the present invention, in the above double-coated high-nickel cathode material for lithium-ion batteries, the cathode material has a specific surface area of 0.4-1.5 m²/g; preferably, the cathode material has an average particle size of 2-5 µm.

In some embodiments of the present invention, in the above double-coated high-nickel cathode material for lithium-ion batteries, the wet coating comprises a step of mixing a reagent for wet coating with the cathode material substrate and then sintering;
preferably, the reagent for wet coating comprises a metal oxide and water, preferably further comprising a strong acid.

The present invention further provides a preparation method for the above double-coated high-nickel cathode material for lithium-ion batteries, comprising the steps of:
(1) mixing a lithium source compound, a cathode material precursor and an M source compound to obtain a mixture;
(2) performing first calcination on the mixture prepared in step (1) to obtain a cathode material substrate;
(3) performing wet coating on the cathode material substrate prepared in step (2) to obtain a cathode material coated with a first coating layer;
(4) performing dry coating on the cathode material coated with the first coating layer prepared in step (3) to obtain the double-coated high-nickel cathode material for lithium-ion batteries.

In some embodiments of the present invention, in the above preparation method, an elemental molar ratio of the lithium source compound, the cathode material precursor and the M source compound, Li:(Ni+Co+Mn):M, is (1.0-1.2):1.0:(0.00-0.01).

In some embodiments of the present invention, in the above preparation method, the wet coating comprises a step of mixing the cathode material substrate, water, a strong acid and a metal oxide and then performing second sintering;
preferably, a mass ratio of the cathode material substrate to the metal oxide is 1.0:(0.0005-0.005); preferably, a mass ratio of the cathode material substrate to water is 1:(1.0-2.0); more preferably, a mass ratio of the cathode material substrate to the strong acid is 1:(0.001-0.01);
more preferably, a temperature of the second sintering is 600-800°C, and a preferred sintering time is 6-20 h; further preferably, the preparation method further comprises the steps of filtering and drying after the mixing.

In some embodiments of the present invention, in the above preparation method, the dry coating comprises a step of mixing the cathode material coated with the first coating layer prepared in step (3) with a boron-containing compound and then performing third sintering;
preferably, a mass ratio of the cathode material coated with the first coating layer to the boron-containing compound is 1.0:(0.002-0.02);
more preferably, a temperature of the third sintering is 250-450°C, and a preferred sintering time is 3-15 h.

The present invention further provides a low-gas production and high-nickel lithium-ion battery, the low-gas production and high-nickel lithium-ion battery comprising the above double-coated high-nickel cathode material for lithium-ion batteries or a double-coated high-nickel cathode material for lithium-ion batteries prepared by the above preparation method.

In some embodiments of the present invention, the low-gas production and high-nickel lithium-ion battery has a first discharge capacity of 190-210 mAh/g under a 4.2V, 1C charge-discharge condition.

In some embodiments of the present invention, the low-gas production and high-nickel lithium-ion battery has a thickness swelling rate of less than or equal to 32% after being stored at 4.25V and 70°C for 30 days.

The present invention further provides the use of the above double-coated high-nickel cathode material for lithium-ion batteries, a double-coated high-nickel cathode material for lithium-ion batteries prepared by the above preparation method, or the above low-gas production and high-nickel lithium-ion battery in the field of digital products, electric vehicles or energy storage.

The present invention has the following beneficial effects.

The high-nickel cathode material for lithium-ion batteries of the present invention has a stable structure and interface, is relatively stable in the air, and is convenient for large-scale production. The prepared battery has low gas production and high safety. The high-nickel cathode material for lithium-ion batteries of the present invention has a morphology of primary particles and a small number of secondary particles agglomerated from primary particles, a high specific capacity and an excellent cycle performance. The high-nickel cathode material for lithium-ion batteries of the present invention has a low cobalt content, greatly reducing raw material costs.

### Brief Description of the Drawings

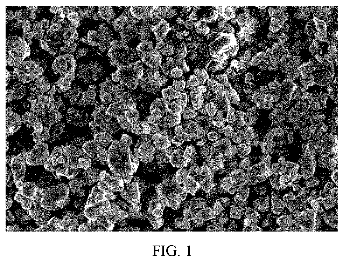

FIG. 1 is a scanning electron micrograph of a cathode material prepared in Example 1 of the present invention at a magnification of 3000 times.

### Detailed Description of the Invention

In the present invention, unless otherwise indicated in specific instances, the numerical ranges listed herein include both the upper and lower limits. The "above" and "below" include endpoint values, as well as all integers and fractions within the range, and are not limited to the specific values listed within the defined range. The "and/or" used herein is inclusive, e.g., "A; and/or B" means only A, or only B, or both A and B.

Due to the high content of nickel, high-nickel lithium-ion cathode materials are relatively unstable in the air, and meanwhile, batteries prepared from high-nickel lithium-ion cathode materials have more gas production and greater safety risks, which limits a large-scale application of high-nickel lithium-ion cathode materials. The present invention provides a double-coated high-nickel cathode material for lithium-ion batteries and a low-gas production and high-nickel lithium-ion secondary battery prepared from the cathode material.

According to a first aspect, in a particular embodiment of the present invention, provided is a double-coated high-nickel cathode material for lithium-ion batteries, comprising a cathode material substrate, a first coating layer coated on a surface of the cathode material substrate, and a second coating layer coated on a surface of the first coating layer;
wherein the double-coated high-nickel cathode material for lithium-ion batteries is prepared by successively performing wet coating and dry coating on the cathode material substrate.

In some embodiments of the present invention, the double-coated high-nickel cathode material for lithium-ion batteries has a general chemical formula of LiₐNiₓCo_{y}Mn_{z}M_{b}O₂·cA·dB, where 1.00 ≤ a ≤1.20, 0.00 < b ≤ 0.01, 0.00 < c ≤ 0.01, 0.00 < d ≤ 0.05, 0.80 ≤ x < 1.00, 0.00 ≤ y <0.12, 0.00 ≤ z <0.2, and x + y + z = 1; M is a doping element selected from one or more of Mg, Ti, Al, Zr, Ba and a rare earth element; A is the first coating layer, and B is the second coating layer.

In some embodiments of the present invention, the double-coated high-nickel cathode material for lithium-ion batteries has a general chemical formula of LiₐNiₓCo_{y}Mn_{z}M_{b}O₂cAdB, where 1.00 ≤ a ≤ 1.20, 0.001 ≤ b ≤ 0.01, 0.80 ≤ x <1.00, 0.00 ≤ y <0.12, 0.00 ≤ z <0.2, 0.0005 < c ≤ 0.01, 0.001 < d ≤ 0.05, and x + y + z = 1; M is a doping element which is one or a combination of two or more selected from the group consisting of Mg, Ti, Al, Zr, Ba and a rare earth element; A is the first coating layer, and B is the second coating layer; preferably 1.02 ≤ a ≤ 1.20, more preferably 1.10 ≤ a ≤ 1.20; more preferably, 0.83 ≤ x ≤ 0.92, preferably 0.03 ≤ y ≤ 0.07, more preferably 0.03 ≤ z ≤ 0.1, further preferably 0.0015 ≤ b ≤ 0.005, and still further preferably 0.002 ≤ b ≤ 0.003.

Hereinafter, the types of elements in the cathode material of the present invention, as well as compounds and contents of the coating layer, will be illustrated.

The inventors have found through research that in the general chemical formula of the cathode material of the present invention, the doping element is one or a combination of two or more selected from the group consisting of Mg, Ti, Al, Zr, Ba and a rare earth element, wherein the rare earth element is one or a combination of two or more selected from the group consisting of lanthanum, cerium, praseodymium, neodymium, promethium, samarium, yttrium, gadolinium, terbium, dysprosium, holmium, erbium, thulium, ytterbium, lutetium, scandium or europium. By choosing chemical elements similar to the substrate elements to replace some gaps of the substrate elements, the skeleton structure of the material may be stabilized.

In some embodiments of the present invention, the first coating layer is formed from a metal oxide which is one or a combination of two or more selected from the group consisting of one or more of Al₂O₃, TiO₂, ZrO₂, MgO and a rare earth oxide; wherein the rare earth oxide is one or a combination of two or more selected from the group consisting of lanthanum oxide, cerium oxide, praseodymium oxide, neodymium oxide, promethium oxide, samarium oxide, yttrium oxide, gadolinium oxide, terbium oxide, dysprosium oxide, holmium oxide, erbium oxide, thulium oxide, ytterbium oxide, lutetium oxide, scandium oxide or europium oxide. By choosing chemical elements similar to the substrate elements for shallow coating, the shallow interface may be stabilized, and side reactions with electrolytes may be suppressed.

In some preferred embodiments of the present invention, the second coating layer is formed from a boron-containing compound; preferably, the boron-containing compound is one or a combination of two or more selected from the group consisting of boric acid, lithium borate, lithium metaborate or lithium tetraborate.

In some embodiments of the present invention, in the above general chemical formula, 0.0005 < c ≤ 0.01, 0.001 < d ≤ 0.03, and too thick the coating layer may affect the capacity; preferably 0.00075 ≤ c ≤ 0.003, more preferably 0.002 ≤ c ≤ 0.003, further preferably 0.002 < d ≤ 0.01, and still further preferably 0.0025 ≤ d ≤ 0.01.

In some embodiments of the present invention, the cathode material powder comprises primary particles and a small number of secondary particles agglomerated from primary particles under a scanning electron microscope (SEM).

The primary particle morphology of the cathode material of the present invention means that the cathode material has a morphology of primary particles and a small number of secondary particles agglomerated from primary particles.

It is noted that the term "a small number of secondary particles agglomerated from primary particles" means that the percentage of the secondary particles agglomerated from primary particles in the cathode material is less than 10%.

The terms "single crystal" or "single crystal-like" of the present invention means that the cathode material has a primary particle morphology.

In some embodiments of the present invention, the cathode material, based on a mass of the cathode material, comprises < 2000 ppm of total free lithium.

In some embodiments of the present invention, the cathode material has a specific surface area of 0.4-1.5 m²/g; preferably, the cathode material has an average particle size of 2-5 µm.

According to a second aspect, the present invention further provides a preparation method for the above double-coated high-nickel cathode material for lithium-ion batteries, comprising the steps of:
(1) mixing a lithium source compound, a cathode material precursor and an M source compound to obtain a mixture;
(2) performing first sintering on the mixture prepared in step (1) to obtain a cathode material substrate;
(3) performing wet coating on the cathode material substrate prepared in step (2) to obtain a cathode material coated with a first coating layer;
(4) performing dry coating on the cathode material coated with the first coating layer prepared in step (3) to obtain the double-coated high-nickel cathode material for lithium-ion batteries.

It should be understood that the above cathode material precursor includes one or more of a nickel-cobalt-manganese precursor, a nickel-cobalt precursor or a nickel-manganese precursor. For example, the nickel-cobalt-manganese precursor is one or a combination of two or more selected from the group consisting of hydroxide, carboxyl oxide or oxide containing nickel, cobalt and manganese, and has a particle size of 3 µm-20 µm.

In some embodiments of the present invention, an elemental molar ratio of the lithium source compound, the cathode material precursor and the M source compound, Li:(Ni+Co+Mn):M, is (1.0-1.2):1.0:(0.00-0.01); preferably, the elemental molar ratio of the lithium source compound, the cathode material precursor and the M source compound, Li:(Ni+Co+Mn):M, is (1.0-1.2): 1.0:(0.0013-0.005).

In some embodiments of the present invention, the wet coating comprises a step of mixing the cathode material substrate with a reagent for wet coating and then performing second sintering; wherein the reagent for wet coating comprises a metal oxide, a strong acid and water.

In some embodiments of the present invention, a mass ratio of the cathode material substrate to the metal oxide is 1.0:(0.0005-0.005), preferably 1.0:(0.0016-0.003); a mass ratio of the cathode material substrate to water is 1.0:(1.0-2.0), preferably 1.0:(1.2-2); a mass ratio of the cathode material substrate to the strong acid is 1.0:(0.001-0.01), preferably 1.0:(0.001-0.006), more preferably 1.0:(0.005-0.006).

In some embodiments of the present invention, a temperature of the second sintering is 600-800°C, preferably 700-780°C, and a preferred sintering time is 6-20 h, preferably 8-10 h; further preferably, the steps of filtering and drying were further comprised after the mixing.

In the present invention, the strong acid is not particularly limited, and commercially commonly used strong acids may be used, such as one or more of sulfuric acid, hydrochloric acid or nitric acid.

In some embodiments of the present invention, the dry coating comprises a step of mixing the cathode material coated with the first coating layer prepared in step (3) with a boron-containing compound and then performing third sintering.

In some embodiments of the present invention, a mass ratio of the cathode material coated with the first coating layer to the boron-containing compound is 1.0:(0.002-0.02), preferably 1.0:(0.004-0.006); a temperature of the sintering is 250-450°C, preferably 250-300°C; more preferably, a sintering time is 3-15 h, preferably 8-12 h.

It should be understood that the sintering in the wet coating step is the second sintering, and the sintering in the dry coating step is the third sintering.

In some embodiments of the present invention, the preparation method further comprise the steps of pulverization and fractionation after the first sintering, the second sintering and the third sintering. The pulverization is jet pulverization. The first sintering, the second sintering and the third sintering are all carried out under a protective oxygen atmosphere.

In some embodiments of the present invention, the lithium source compound includes, but is not limited to, one or a combination of two or more selected from the group consisting of a lithium-containing oxide, hydroxide, carbonate, sulfate or nitrate, for example, including lithium hydroxide monohydrate.

In some embodiments of the present invention, the M source compound includes one or a combination of two or more selected from the group consisting of an M element-containing oxide, hydroxide, carbonate, sulfate or nitrate, preferably an oxide or nitrate, for example, including but not limited to one or a combination of two or more selected from the group consisting of aluminum oxide, titanium oxide, magnesium oxide, yttrium trioxide, barium oxide or zirconium oxide.

In some embodiments of the present invention, the metal oxide is one or a combination of two or more selected from the group consisting of Al₂O₃, TiO₂, ZrO₂, MgO and a rare earth oxide; wherein the rare earth oxide is selected from one or more of lanthanum oxide, cerium oxide, praseodymium oxide, neodymium oxide, promethium oxide, samarium oxide, yttrium oxide, gadolinium oxide, terbium oxide, dysprosium oxide, holmium oxide, erbium oxide, thulium oxide, ytterbium oxide, lutetium oxide, scandium oxide or europium oxide.

In some embodiments of the present invention, the second coating layer is formed from a boron-containing compound; preferably, the boron-containing compound is one or a combination of two or more selected from the group consisting of boric acid, lithium borate, lithium metaborate or lithium tetraborate.

According to a third aspect, the present invention further provides a low-gas production and high-nickel lithium-ion battery, the low-gas production and high-nickel lithium-ion battery comprising the above double-coated high-nickel cathode material or a double-coated high-nickel cathode material prepared by the above preparation method.

In some embodiments of the present invention, the low-gas production and high-nickel lithium-ion battery has a first discharge capacity of 190-210 mAh/g under a 4.2V, 1C charge-discharge condition.

In some preferred embodiments of the present invention, the low-gas production and high-nickel lithium-ion battery has a thickness swelling rate of less than or equal to 32%, preferably less than 30%, after being stored at 70°C for 30 days.

It should be understood that the low-gas production and high-nickel lithium-ion battery of the present invention comprises an electrode, a non-aqueous electrolyte, a separator and a container, wherein the electrode comprises a positive electrode and a negative electrode, the positive electrode comprising a positive current collector and a positive electrode coating material coated on the positive current collector. The current collector may be a variety of current collectors well known to those skilled in the art, such as aluminum foil, copper foil and nickel-plated steel strip. The positive electrode coating material comprises a positive electrode active substance, a binder and a conductive agent, wherein the positive electrode active substance is the double-coated high-nickel lithium-ion cathode material of the present invention; the conductive agent includes, but is not limited to, one or a combination of two or more selected from the group consisting of carbon black conductive agent, carbon nanotubes (CNT), SP-Li, flake graphite, Ketjen Black, VGCF and CNF; and the binder includes, but is not limited to, one or a combination of two or more selected from the group consisting of polyvinylidene fluoride (PVDF), vinylidene fluoride (VF2) homopolymers, polyvinylidene fluoride copolymers, and copolymers of vinylidene fluoride (VF2)/hexafluoropropylene (HFP).

The negative electrode comprises a negative current collector and a negative electrode coating material coated on the negative current collector. The current collector may be a variety of current collectors well known to those skilled in the art, such as aluminum foil, copper foil and nickel-plated steel strip. The negative electrode coating material comprises a negative electrode active substance, a binder and a conductive agent, the negative electrode active substance including but not limited to artificial graphite (C) or mesocarbon microbeads; the conductive agent including but not limited to one or a combination of two or more selected from the group consisting of carbon black conductive agent, carbon nanotube (CNT), SP-Li, conductive graphite, flake graphite, Ketjen Black, VGCF and CNF; the binder including but not limited to one or a combination of two or more selected from the group consisting of polyvinylidene fluoride (PVDF), styrene-butadiene rubber latex (SBR) and sodium carboxymethylcellulose (CMC).

It should be understood that the separator is a PP/PE film conventionally used in the industry for separating a positive electrode from a negative electrode. The container is an inclusion of the positive electrode, the negative electrode, the separator and the electrolyte.

According to a fourth aspect, the present invention further provides the use of the above double-coated high-nickel cathode material, a double-coated high-nickel cathode material prepared by the above preparation method, or the above low-gas production and high-nickel lithium-ion battery in the field of digital products, electric vehicles or energy storage.

The materials described in the present invention and the preparation method and application thereof are illustrated by the following specific examples. All reagents or instruments not described in the text of the present application are contents that a person of ordinary skill in the art can conventionally confirm.

The reagents used in the following examples are shown in Table 1.

**Table 1. Information of reagents used in the examples of the present invention**

| Reagent name | Grade | Model | Vendor |
|---|---|---|---|
| Nickel-cobalt-manganese precursor | Ni:Co:Mn = 83:07:10 | Particle size: 10 µm, chemical formula: Ni_{0.83}Co_{0.07}Mn_{0.1}(OH)₂ | Guangdong Jiana Energy Technology Co. Ltd. |
| Nickel-cobalt-manganese precursor | Ni:Co:Mn = 87:05:08 | Particle size: 10 µm, chemical formula: Ni_{0.87}Co_{0.05}Mn_{0.08}(OH)₂ | Guangdong Jiana Energy Technology Co. Ltd. |
| Nickel-cobalt-manganese precursor | Ni:Co:Mn = 92:5:3 | Particle size: 10 µm, chemical formula: Ni_{0.92}Co_{0.05}Mn_{0.03}(OH)₂ | Guangdong Jiana Energy Technology Co. Ltd. |
| Nickel-cobalt-manganese precursor | Ni:Co:Mn = 92:3:5 | Particle size: 10 µm, chemical formula: Ni_{0.92}Co_{0.03}Mn_{0.05}(OH)₂ | Guangdong Jiana Energy Technology Co. Ltd. |
| Nano titanium dioxide | Ceramic grade | --- | Anhui Xuancheng Jingrui New Material Co. Ltd. |
| Nano zirconium oxide | Ceramic grade | --- | Anhui Xuancheng Jingrui New Material Co. Ltd. |
| Nano aluminum oxide | Ceramic grade | --- | Anhui Xuancheng Jingrui New Material Co. Ltd. |
| Nitric acid | Chemically pure | 99.9 wt% | Chongqing Chuandong Chemical Co. Ltd. |
| Sulfuric acid | Chemically pure | 99.9 wt% | Chongqing Chuandong Chemical Co. Ltd. |
| Lithium hydroxide monohydrate | Battery grade | 99.5 wt% | Jiangxi Ganfeng Lithium Industry Co. Ltd. |
| Boric acid | Chemically pure | 99.5 wt% | Aladdin |
| Lithium borate | Chemically pure | 99.5 wt% | Aladdin |
| Lithium metaborate | Chemically pure | 99.5 wt% | Aladdin |
| Lithium tetraborate | Chemically pure | 99.5 wt% | Aladdin |
| Methyl red | Chemically pure | 99.5 wt% | Tianjin Guangfu Technology Development Co. Ltd. |
| Phenolphthalein | Chemically pure | 99.9 wt% | Chengdu Jinshan Chemical Reagent Co. Ltd. |
| HCL | Chemically pure | 99.9 wt% | Sichuan Xilong Science Co. Ltd. |
| High-purity oxygen | Industrial grade | Purity: 99.95%. | Shenzhen Nanshan Gas Station |
| Conductive carbon black | Battery grade | Super P Li | TIMCAL, Switzerland |
| N-methylpyrrolidone | Battery grade | Content: 99.5% | Jiangsu Nanjing Jinlong Chemical Plant |
| Polyvinylidene fluoride | Battery grade | Solef 6020 | Solvay Chemical Company, USA |
| Aluminum foil | Battery grade | Thickness: 16 µm | Aluminium Company of America |
| Electronic tape | Electronic grade | Green width: 10 mm | 3M Company |
| Lithium sheet | Electronic grade | Diameter: Φ20 mm, purity: ≥ 99.9% | Shanghai Shunyou Metal Material Co. Ltd. |
| Electrolyte | Electronic grade | Mixed solvents: dimethyl carbonate (DMC):ethylene carbonate (EC):diethyl carbonate (DEC) = 1:1:1 (mass ratio), electrolyte: lithium hexafluorophosphate; a concentration of lithium hexafluorophosphate in the electrolyte: 1 mol/L | Shenzhen Xinzhoubang Company |
| Separator | --- | PP/PE/PP tri-layer material, Celgard M825, thickness: 16 µm. | Celgard Company, USA |
| Aluminum plastic film | Industrial grade | Total thickness: 160 µm | Japan DNP Company |
| Dual-star ball mill | | SHQM | Lianyungang Chunlong Experimental Instrument Co. Ltd. |
| Jet mill | | MX-50 | Yixing Juneng Crushing |
| | | | Equipment Company |

### Example 1

Lithium hydroxide monohydrate, a precursor with a molar ratio of Ni:Co:Mn = 92:03:05 (chemical formula: Ni_{0.92}Co_{0.03}Mn_{0.05}(OH)₂) and nano titanium dioxide powder were added to a dual-star ball mill at a molar ratio of Li:(Ni+Co+Mn):Ti = 1.2:1:0.005, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 800°C for 25 hours (first sintering) under an oxygen atmosphere, cooled to room temperature, and ball-milled at a rotation speed of 40 Hz for 10 min to obtain a main material 1 for a cathode material (namely, a cathode material substrate). Then, water, the main material 1, sulfuric acid and aluminum oxide were weighed at a mass ratio of 1.5:1.0:0.006:0.0012, totaling 1 kg. Water, the main material and sulfuric acid (98 wt%) were successively added to a reaction kettle, mixed and stirred for 10 min. Aluminum oxide was then added, continuously stirred for 10 min, suction filtered and dried at 120°C. The dried sample was sintered at a temperature rate of 10°C/min up to 600°C for 18 hours (second sintering) under an oxygen atmosphere and cooled to room temperature. The sample obtained by the second sintering was then pulverized using a jet mill at a pulverization pressure of 0.65 MPa to obtain a main material 2 for the cathode material (namely, a cathode material coated with a first coating layer). The main material 2 and boric acid were weighed at a mass ratio of 1.0:0.004, totaling 1 kg. The weighed boric acid was added to the main material 2 and ball-milled at a rotation speed of 40 Hz for 10 min. The mixed material was placed into a muffle furnace, sintered at a temperature rate of 5°C/min up to 450°C for 6 hours under an air atmosphere, cooled to room temperature, and sieved with a 300 mesh metal sieve to obtain a double-coated high-nickel cathode material for lithium-ion batteries 1.

Elemental composition analysis of the double-coated high-nickel cathode material for lithium-ion batteries 1 was performed using the following test method. The results were shown in Table 2, and the final cathode material had a chemical formula of Li_{1.2}Ni_{0.92}Co_{0.03}Mn_{0.05}Ti_{0.005}O₂•0.0012AlO₃•0.006Li₃BO₃.

0.2000 g of the sample was accurately weighed (with an accuracy of 0.0001 g) into a clean 100 mL glass beaker. The beaker was added with 10 mL (1:1) of aqua regia solution (accompanying a blank test), covered with a watch glass, and placed on a hot plate to heat the solution for evaporation. When the breaker was nearly dry, it was removed from heat and cooled to room temperature. The watch glass and the side wall of the beaker were rinsed with deionized water at least 3 times. All solutions were transferred into a 50 mL volumetric flask, diluted to a constant volume with deionized water, and shaken well. Then, 1 mL of the sample was transferred into a 100 mL volumetric flask and shaken well after diluted to a constant volume. The solution was tested using an Inductively Coupled Plasma Emission Spectrometer (Thermo Fisher Scientific, USA/icap7400) according to YS/T 1006.2-2014 Part 1.

**Table 2. Test results of element mass content of the cathode material**

| Elements | Li | Co | Ni | Mn | Ti | Al | B |
|---|---|---|---|---|---|---|---|
| % | 7.9221 | 1.9112 | 54.5322 | 2.8013 | 0.2376 | 0.0643 | 0.0642 |

Physical parameters of the double-coated high-nickel cathode material for lithium-ion batteries were tested according to the following method:
1) Test of average particle size: an MS3000 Laser Particle-Size Instrument was used for testing as follows, and the test results were shown in Table 12.
   An appropriate amount of sample was taken in a 100 ml beaker, first rinsed around an inner wall of the beaker with a washing bottle, and then rinsed for the sample adhered at the bottom of the beaker with the washing bottle. The amount of pure water added to the beaker was controlled at 20-30 mL, and the ultrasonic time was 5 min (stirred for 10 s respectively before, during and after ultrasonic treatment at a rate of about 2 r/s). 100 ± 10 ml of pure water was added to a sample injector of MS3000 Laser Particle-Size Instrument, and a rotation speed was adjusted to 3000 r/min. After the Start was clicked, the instrument automatically focused, measured the background, and waited for prompts to operate. After ultrasonic treatment, the sample was transferred into a stirring tank. The beaker was then rinsed with the washing bottle to ensure the sample was completely transferred. After the sample is completely added, the software automatically starts the measurement. Upon the completion of the measurement, data is automatically saved.
2) Test of specific surface area: A full-automatic specific surface and porosity analyzer (Micromeritics Co., Ltd., TriStar II 3020) was used for testing. The test results were shown in Table 12.
3) Free lithium was tested as follows, and the test results were shown in Table 12.

An appropriate amount of m g of sample (about 30 g) was accurately weighed, with an accuracy of 0.01 g, and placed into a 250 mL conical flask. A magnetic stirring bar was put into the conical flask, and 100 mL of deionized water was added. The conical flask was placed on a magnetic stirrer to stir for 30 minutes. The mixed solution was filtered with filter paper and a funnel. A 50 mL filtrate was transferred with a 50 mL pipette into a 100 mL beaker. A magnetic stirring bar was put into the breaker. The beaker was placed on the magnetic stirrer, and 2 drops of phenolphthalein indicator were added. The mixed solution was titrated with 0.05 mol/L hydrochloric acid standard titration solution until the color changed from red to colorless. A volume V₁ (endpoint 1) of 0.05 mol/L hydrochloric acid standard titration solution was recorded. Then, 2 drops of methyl red indicator were added to change the color from colorless to yellow. The mixed solution was titrated with 0.05 mol/L hydrochloric acid standard titration solution until the color changed from yellow to orange. The beaker was placed into a heating furnace for heating until the solution boiled (the color of the solution changed from orange to yellow). The 100 mL beaker was removed, cooled to room temperature, and placed on the magnetic stirrer again. The mixed solution was titrated with 0.05 mol/L hydrochloric acid standard titration solution until the color changed from yellow to light red. A volume V₂ (endpoint 2) of 0.05 mol/L hydrochloric acid standard titration solution was recorded.
Lithium hydroxide: LiOH(wt%) = [V₂-2 × (V₂-V₁)] × 0.05 × 23.946 × 2 × 100/ (m × 1000)
Lithium carbonate: Li₂CO₃(wt%) = (V₂-V₁) × 0.05 × 73.886 × 2 × 100/(m × 1000)
Total free lithium: Li⁺(wt%) = V₂ × 0.05 × 6.94 × 2 × 100 / (m × 1000),
m represents a mass of sample (g); V₁ represents the first titration endpoint; V₂ represents the second titration endpoint.

### 4) Morphology test of cathode material:

The cathode material 1 of Example 1 was subjected to an SEM test with the following parameters: acceleration voltage EHT = 15.00 kV, working distance WD = 7.0 mm, and probe selection Signal A = InLens, as shown in FIG. 1. It can be seen from FIG. 1 that the material had a primary particle morphology, i.e., a morphology of primary particles and a small number of secondary particles agglomerated from primary particles.

### Example 2

Lithium hydroxide monohydrate, a precursor with a molar ratio of Ni:Co:Mn = 92:03:05 (chemical formula: Ni_{0.92}Co_{0.03}Mn_{0.05}(OH)₂) and nano zirconium oxide powder were added to a dual-star ball mill at a molar ratio of Li:(Ni+Co+Mn):Zr = 1.08:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 830°C for 20 hours (first sintering) under an oxygen atmosphere, cooled to room temperature, and ball-milled at a rotation speed of 40 Hz for 10 min to obtain a main material 1 for a cathode material. Then, water, the main material 1, sulfuric acid and titanium dioxide were weighed at a mass ratio of 2.0:1.0:0.005:0.0016, totaling 1 kg. Water, the main material and sulfuric acid (98 wt%) were successively added to a reaction kettle, mixed and stirred for 10 min. Titanium dioxide was then added, continuously stirred for 10 min, suction filtered, and dried at 120°C. The dried sample was sintered at a temperature rate of 10°C/min up to 700°C for 8 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and lithium borate were weighed at a mass ratio of 1.0:0.006, totaling 1 kg. The lithium borate was added to the main material 2 and ball-milled at a rotation speed of 40 Hz for 10 min. The mixed material was placed into a muffle furnace, sintered at a temperature rate of 5°C/min up to 250°C for 12 hours under an air atmosphere, cooled to room temperature, and sieved with a 300 mesh metal sieve to obtain a double-coated high-nickel cathode material for lithium-ion batteries 2.

The double-coated high-nickel cathode material for lithium-ion batteries was tested for the particle size of primary particles, specific surface area and total free lithium content according to the method described in Example 1. The results were shown in Table 12.

Elemental composition analysis of the double-coated high-nickel cathode material for lithium-ion batteries 2 was performed using the test method in Example 1. The results were shown in Table 3, and the final cathode material had a chemical formula of Li_{1.08}Ni_{0.92}Co_{0.03}Mn_{0.05}Zr_{0.002}O₂•0.002TiO₂•0.008 Li₃BO₃.

**Table 3. Test results of element mass content of the cathode material**

| Elements | Li | Co | Ni | Mn | Zr | Ti | B |
|---|---|---|---|---|---|---|---|
| % | 7.3123 | 1.9314 | 54.4619 | 2.8623 | 0.1832 | 0.0952 | 0.0840 |

### Example 3

Lithium hydroxide monohydrate, a precursor with a molar ratio of Ni:Co:Mn = 87:05:08 (chemical formula: Ni_{0.87}Co_{0.05}Mn_{0.08}(OH)₂) and nano aluminum oxide powder were added to a dual-star ball mill at a molar ratio of Li:(Ni+Co+Mn):Al = 1.1:1:0.003, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 860°C for 20 hours (first sintering) under an oxygen atmosphere, cooled to room temperature, and ball-milled at a rotation speed of 40 Hz for 10 min to obtain a main material 1 for a cathode material. Then, water, the main material 1, sulfuric acid and zirconium oxide were weighed at a mass ratio of 1.2:1.0:0.005:0.003, totaling 1 kg. Water, the main material and sulfuric acid were successively added to a reaction kettle, mixed and stirred for 10 min. Zirconium oxide was then added, continuously stirred for 10 min, suction filtered, and dried at 120°C. The dried sample was sintered at a temperature rate of 10°C/min up to 750°C for 10 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and lithium metaborate were weighed at a mass ratio of 1.0:0.005, totaling 1 kg. The lithium metaborate was added to the main material 2 and ball-milled at a rotation speed of 40 Hz for 10 min. The mixed material was placed into a muffle furnace, sintered at a temperature rate of 5°C/min up to 300°C for 8 hours under an air atmosphere, cooled to room temperature, and sieved with a 300 mesh metal sieve to obtain a double-coated high-nickel cathode material for lithium-ion batteries 3.

The double-coated high-nickel cathode material for lithium-ion batteries 3 was tested for the particle size of primary particles, specific surface area and total free lithium content according to the method described in Example 1. The results were shown in Table 12.

Elemental composition analysis of the double-coated high-nickel cathode material for lithium-ion batteries 3 was performed using the test method in Example 1. The results were shown in Table 4, and the final cathode material had a chemical formula of Li_{1.1}Ni_{0.87}Co_{0.05}Mn_{0.08}Al_{0.003}O₂•0.0025ZrO₂•0.01 LiBO₂.

**Table 4. Test results of element mass content of the cathode material**

| Elements | Li | Co | Ni | Mn | Al | Zr | B |
|---|---|---|---|---|---|---|---|
| % | 7.4128 | 3.1246 | 52.6737 | 4.5858 | 0.0542 | 0.2287 | 0.1020 |

### Example 4

Lithium hydroxide monohydrate, a precursor with a molar ratio of Ni:Co:Mn = 83:07:10 (chemical formula: Ni_{0.83}Co_{0.07}Mn_{0.1}(OH)₂) and nano zirconium oxide powder were added to a dual-star ball mill at a molar ratio of Li:(Ni+Co+Mn):Zr = 1.12:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 880°C for 24 hours under an oxygen atmosphere, cooled to room temperature, and ball-milled at a rotation speed of 40 Hz for 10 min to obtain a main material 1 for a cathode material. Then, water, the main material 1, sulfuric acid and aluminum oxide were weighed at a mass ratio of 1.5:1.0:0.005:0.003, totaling 1 kg. Water, the main material and sulfuric acid (98 wt%) were successively added to a reaction kettle, mixed and stirred for 10 min. Aluminum oxide was then added, continuously stirred for 10 min, suction filtered, and dried at 120°C. The dried sample was sintered at a temperature rate of 10°C/min up to 780°C for 10 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and lithium tetraborate were weighed at a mass ratio of 1.0:0.004, totaling 1 kg. The lithium tetraborate was added to the main material 2 and ball-milled at a rotation speed of 40 HZ for 10 min. The mixed material was placed into a muffle furnace, sintered at a temperature rate of 5°C/min up to 280°C for 8 hours under an air atmosphere, cooled to room temperature, and sieved with a 300 mesh metal sieve to obtain a double-coated high-nickel cathode material for lithium-ion batteries 4.

The double-coated high-nickel cathode material for lithium-ion batteries 4 was tested for the particle size of primary particles, specific surface area and total free lithium content according to the method described in Example 1. The results were shown in Table 12.

Elemental composition analysis of the double-coated high-nickel cathode material for lithium-ion batteries 4 was performed using the test method in Example 1. The results were shown in Table 5, and the final cathode material had a chemical formula of Li_{1.12}Ni_{0.83}Co_{0.07}Mn_{0.10}Zr_{0.002}O₂•0.003Al₂O₃•0.0025 Li₂B₄O₇.

**Table 5. Test results of element mass content of the cathode material**

| Elements | Li | Co | Ni | Mn | Zr | Al | B |
|---|---|---|---|---|---|---|---|
| % | 7.4789 | 4.2859 | 50.1489 | 5.6396 | 0.1743 | 0.1478 | 0.0998 |

### Example 5

Lithium hydroxide monohydrate, a precursor with a molar ratio of Ni:Co:Mn = 87:05:08 (chemical formula: Ni_{0.87}Co_{0.05}Mn_{0.08}(OH)₂) and nano zirconium oxide powder were added to a dual-star ball mill at a molar ratio of Li:(Ni+Co+Mn):Zr = 1.1:1:0.0013, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 810°C for 30 hours under an oxygen atmosphere, cooled to room temperature, and ball-milled at a rotation speed of 40 Hz for 10 min to obtain a main material 1 for a cathode material. Then, water, the main material 1, sulfuric acid and aluminum oxide were weighed at a mass ratio of 1.2:1.0:0.005:0.0024, totaling 1 kg. Water, the main material and sulfuric acid (98 wt%) were successively added to a reaction kettle, mixed and stirred for 10 min. Aluminum oxide was then added, continuously stirred for 10 min, suction filtered, and dried at 120°C. The dried sample was sintered at a temperature rate of 10°C/min up to 760°C for 12 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and boric acid were weighed at a mass ratio of 1.0:0.004, totaling 1 kg. The boric acid was added to the main material 2 and ball-milled at a rotation speed of 40 Hz for 10 min. The mixed material was placed into a muffle furnace, sintered at a temperature rate of 5°C/min up to 320°C for 6 hours under an air atmosphere, cooled to room temperature, and sieved with a 300 mesh metal sieve to obtain a double-coated high-nickel cathode material for lithium-ion batteries 5.

The double-coated high-nickel cathode material for lithium-ion batteries 5 was tested for the particle size of primary particles, specific surface area and total free lithium content according to the method described in Example 1. The results were shown in Table 12.

Elemental composition analysis of the double-coated high-nickel cathode material for lithium-ion batteries 5 was performed using the test method in Example 1. The results were shown in Table 6, and the final cathode material had a chemical formula of Li_{1.1}Ni_{0.87}Co_{0.05}Mn_{0.08}Zr_{0.0016}O₂•0.0024Al₂O₃•0.0065 Li₃BO₃.

**Table 6. Test results of element mass content of the cathode material**

| Elements | Li | Co | Ni | Mn | Zr | Al | B |
|---|---|---|---|---|---|---|---|
| % | 7.3949 | 3.2790 | 52.6280 | 4.7500 | 0.1120 | 0.1372 | 0.0689 |

### Example 6

Lithium hydroxide monohydrate, a precursor with a molar ratio of Ni:Co:Mn = 92:05:03 (chemical formula: Ni_{0.92}Co_{0.05}Mn_{0.03}(OH)₂) and yttrium oxide powder were added to a dual-star ball mill at a molar ratio of Li:(Ni+Co+Mn):Y = 1.02:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 850°C for 8 hours (first sintering) under an oxygen atmosphere, cooled to room temperature, and ball-milled at a rotation speed of 40 Hz for 10 min to obtain a main material 1 for a cathode material. Then, water, the main material 1, nitric acid and niobium oxide were weighed at a mass ratio of 1.0:1.0:0.001:0.002, totaling 1 kg. Water, the main material and nitric acid (65 wt%) were successively added to a reaction kettle, mixed and stirred for 10 min. Niobium oxide was then added, continuously stirred for 10 min, suction filtered, and dried at 120°C. The dried sample was sintered at a temperature rate of 10°C/min up to 720°C for 20 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and lithium borate were weighed at a mass ratio of 1.0:0.02, totaling 1 kg. The lithium borate was added to the main material 2 and ball-milled at a rotation speed of 40 Hz for 10 min. The mixed material was placed into a muffle furnace, sintered at a temperature rate of 5°C/min up to 350°C for 3 hours under an air atmosphere, cooled to room temperature, and sieved with a 300 mesh metal sieve to obtain a double-coated high-nickel cathode material for lithium-ion batteries 6.

The double-coated high-nickel cathode material for lithium-ion batteries 6 was tested for the particle size of primary particles, specific surface area and total free lithium content according to the method described in Example 1. The results were shown in Table 12.

Elemental composition analysis of the double-coated high-nickel cathode material for lithium-ion batteries 6 was performed using the test method in Example 1. The results were shown in Table 7, and the final cathode material had a chemical formula of Li_{1.02}Ni_{0.92}Co_{0.05}Mn_{0.03}Y_{0.002}O₂•0.00075Nb₂O₅•0.03 Li₃BO₃.

**Table 7. Test results of element mass content of the cathode material**

| Elements | Li | Co | Ni | Mn | Y | Nb | B |
|---|---|---|---|---|---|---|---|
| % | 7.0254 | 2.8946 | 54.1236 | 1.6758 | 0.1753 | 0.1289 | 0.3087 |

### Example 7

The difference from Example 6 is that no nitric acid was added for wet coating. The specific method was as follows.

Lithium hydroxide monohydrate, a precursor with a molar ratio of Ni:Co:Mn = 92:05:03 (chemical formula: Ni_{0.92}Co_{0.05}Mn_{0.03}(OH)₂) and yttrium oxide powder were added to a dual-star ball mill at a molar ratio of Li:(Ni+Co+Mn):Y = 1.02:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 850°C for 8 hours (first sintering) under an oxygen atmosphere, cooled to room temperature, and ball-milled at a rotation speed of 40 Hz for 10 min to obtain a main material 1 for a cathode material. Then, water, the main material 1 and niobium oxide were weighed at a mass ratio of 1.0:1.0:0.002, totaling 1 kg. Water and the main material were successively added to a reaction kettle, mixed and stirred for 10 min. Niobium oxide was then added, continuously stirred for 10 min, suction filtered, and dried at 120°C. The dried sample was sintered at a temperature rate of 10°C/min up to 720°C for 20 hours (second sintering) under an oxygen atmosphere and cooled to room temperature. The sample obtained by the second sintering was then pulverized using a jet mill at a pulverization pressure of 0.65 MPa to obtain a main material 2 for the cathode material. The main material 2 and lithium borate were weighed at a mass ratio of 1.0:0.02, totaling 1 kg. The lithium borate was added to the main material 2 and ball-milled at a rotation speed of 40 Hz for 10 min. The mixed material was placed into a muffle furnace, sintered at a temperature rate of 5°C/min up to 350°C for 3 hours under an air atmosphere, cooled to room temperature, and sieved with a 300 mesh metal sieve to obtain a double-coated high-nickel cathode material for lithium-ion batteries 7.

The double-coated high-nickel cathode material for lithium-ion batteries 7 was tested for the particle size of primary particles, specific surface area and total free lithium content according to the method described in Example 1. The results were shown in Table 12.

Elemental composition analysis of the double-coated high-nickel cathode material for lithium-ion batteries 7 was performed using the test method in Example 1. The results were shown in Table 8, and the final cathode material had a chemical formula of Li_{1.02}Ni_{0.92}Co_{0.05}Mn_{0.03}Y_{0.002}O₂•0.00075Nb₂O₅•0.03 Li₃BO₃.

**Table 8. Test results of element mass content of the cathode material**

| Elements | Li | Ni | Co | Mn | Y | Nb | B |
|---|---|---|---|---|---|---|---|
| % | 7.0264 | 54.1674 | 2.8763 | 1.6678 | 0.1748 | 0.1302 | 0.3142 |

### Comparative Example 1

Lithium hydroxide monohydrate, a precursor with a molar ratio of Ni:Co:Mn = 83:07:10 (chemical formula: Ni_{0.83}Co_{0.07}Mn_{0.1}(OH)₂) and nano zirconium oxide powder were added to a dual-star ball mill at a molar ratio of Li:(Ni+Co+Mn):Zr = 1.12:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 880°C for 24 hours under an oxygen atmosphere, cooled to room temperature, and ball-milled at a rotation speed of 40 Hz for 10 min to obtain a main material 1 for a cathode material. Then, water, the main material 1, sulfuric acid and aluminum oxide were weighed at a mass ratio of 1.5:1.0:0.005:0.003, totaling 1 kg. Water, the main material and sulfuric acid were successively added, mixed and stirred for 10 min. Aluminum oxide was then added, continuously stirred for 10 min, suction filtered, and dried at 120°C. The dried sample was sintered at a temperature rate of 10°C/min up to 780°C for 10 hours (second sintering) under an oxygen atmosphere and cooled to room temperature. The sample obtained by the second sintering was then jet-pulverized and sieved with a 300 mesh metal sieve to obtain a cathode material D1.

The cathode material D1 was tested for the particle size of primary particles, specific surface area and total free lithium content according to the method described in Example 1. The results were shown in Table 12.

Elemental composition analysis of the cathode material D1 was performed using the test method in Example 1. The results were shown in Table 9, and the final cathode material D1 had a chemical formula of Li_{1.12}Ni_{0.83}Co_{0.07}Mn_{0.10}Zr_{0.002}O₂•0.003Al₂O₃.

**Table 9. Test results of element mass content of the cathode material**

| Elements | Li | Co | Ni | Mn | Zr | Al |
|---|---|---|---|---|---|---|
| % | 7.4242 | 4.3111 | 50.2667 | 5.6179 | 0.1801 | 0.1588 |

### Comparative Example 2

Lithium hydroxide monohydrate, a precursor with a molar ratio of Ni:Co:Mn = 83:07:10 (chemical formula: Ni_{0.83}Co_{0.07}Mn_{0.1}(OH)₂) and nano zirconium oxide powder were added to a ball mill at a molar ratio of Li:(Ni+Co+Mn):Zr = 1.12:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 880°C for 24 hours under an oxygen atmosphere, cooled to room temperature, and ball-milled at a rotation speed of 40 Hz for 10 min to obtain a main material 1 for a cathode material. Then, the main material 1 and lithium tetraborate were weighed at a mass ratio of 1.0:0.004, totaling 1 kg. The lithium tetraborate was added to the main material 1 and ball-milled at a rotation speed of 40 Hz for 10 min. The mixed material was placed into a muffle furnace, sintered at a temperature rate of 5°C/min up to 280°C for 8 hours under an air atmosphere, cooled to room temperature, and sieved with a 300 mesh metal sieve to obtain a cathode material D2.

The cathode material D2 was tested for the particle size of primary particles, specific surface area and total free lithium content according to the method described in Example 1. The results were shown in Table 12.

Elemental composition analysis of the cathode material D2 was performed using the test method in Example 1. The results were shown in Table 10, and the final cathode material D2 had a chemical formula of Li_{1.12}Ni_{0.83}Co_{0.07}Mn_{0.07}Zr_{0.002}O₂•0.0025 Li₂B₄O₇.

**Table 10. Test results of element mass content of the cathode material**

| Elements | Li | Co | Ni | Mn | Zr | B |
|---|---|---|---|---|---|---|
| % | 7.8696 | 4.2959 | 50.1270 | 5.6149 | 0.1764 | 0.1022 |

### Comparative Example 3

The difference from Example 4 was that the first coating was a process of dry coating followed by water washing and then second dry coating. The specific method was as follows.

Lithium hydroxide monohydrate, a precursor with a molar ratio of Ni:Co:Mn = 83:07:10 (chemical formula: Ni_{0.83}Co_{0.07}Mn_{0.1}(OH)₂) and nano zirconium oxide powder were added to a dual-star ball mill at a molar ratio of Li:(Ni+Co+Mn):Zr = 1.12:1:0.002, totaling 1 kg, ball-milled at a rotation speed of 40 Hz for 10 min to mix uniformly and then discharged (namely, a mixed material). The mixed material was placed into a muffle furnace, sintered at a temperature rate of 5°C/min up to 880°C for 24 hours under an oxygen atmosphere, cooled to room temperature, and ball-milled at a rotation speed of 40 Hz for 10 min to obtain a main material 1 for a cathode material.

The obtained main material 1 and aluminum oxide were added to a ball mill at a mass ratio of 1.0:0.003, totaling 400 g, ball-milled at a rotation speed of 40 Hz for 10 min to mix uniformly and then discharged. The mixed material was placed into a muffle furnace, sintered at a temperature rate of 10°C/min up to 780°C for 10 hours (second sintering) under an oxygen atmosphere, and cooled to room temperature to obtain an intermediate product.

Then, water and the intermediate product were successively added to a reaction kettle at a mass ratio of 1.5:1.0, totaling 1 kg, mixed and stirred for 10 min, suction filtered, and dried at 120°C. The dried sample was processed to obtain a main material 2 for the cathode material. The main material 2 and lithium tetraborate were weighed at a mass ratio of 1.0:0.004, totaling 1 kg. The lithium tetraborate was added to the main material 2, ball-milled at a rotation speed of 40 Hz for 10 min. The mixed material was placed into a muffle furnace, sintered at a temperature rate of 5°C/min up to 280°C for 8 hours under an air atmosphere, cooled to room temperature, and sieved with a 300 mesh metal sieve to obtain a cathode material D3.

The cathode material D3 was tested for the particle size of primary particles, specific surface area and total free lithium content according to the method described in Example 1. The results were shown in Table 12.

Elemental composition analysis of the cathode material D3 was performed using the test method in Example 1. The results were shown in Table 11, and the final cathode material had a chemical formula of Li_{1.12}Ni_{0.83}Co_{0.07}Mn_{0.10}Zr_{0.002}O₂•0.003Al₂O₃•0.0025 Li₂B₄O₇.

**Table 11. Test results of element mass content of the cathode material**

| Elements | Li | Co | Ni | Mn | Zr | Al | B |
|---|---|---|---|---|---|---|---|
| % | 7.5124 | 4.2785 | 50.2037 | 5.6271 | 0.1712 | 0.1523 | 0.0956 |

**Table 12. Characterization results of cathode materials obtained in Examples and Comparative Examples**

| Examples | Specific surface area (m²/g) | Particle size | Free lithium |
|---|---|---|---|
| | | D50 (µm) | Total free lithium (ppm) |
| Example 1 | 0.89 | 3.0 | 1478 |
| Example 2 | 0.82 | 3.2 | 1246 |
| Example 3 | 0.85 | 3.5 | 1097 |
| Example 4 | 0.86 | 3.8 | 972 |
| Example 5 | 0.90 | 2.8 | 1124 |
| Example 6 | 0.81 | 3.2 | 1643 |
| Example 7 | 0.85 | 3.3 | 1824 |
| Comparative Example 1 | 0.98 | 3.5 | 1980 |
| Comparative Example 2 | 1.13 | 3.2 | 2748 |
| Comparative Example 3 | 0.75 | 4.2 | 782 |

### Experimental Example

### Preparation and performance evaluation of a lithium-ion battery

The battery system used in this experiment was the most common evaluation system due to the great influence of different battery systems on the cycle retention rate of materials, which used a 1 mol/L lithium hexafluorophosphate solution as an electrolyte, with a solvent in the lithium hexafluorophosphate solution being a mixed solvent of dimethyl carbonate (DMC), ethylene carbonate (EC) and diethyl carbonate (DEC) in a mass ratio of 1:1:1, a mixture of artificial graphite, conductive carbon black, carboxymethyl cellulose and a binder in a weight ratio of 95:1:1:3 as an anode material, and a Model 454261 cell, to expose actual defects of the cathode material as soon as possible and determine the performance of the cathode material.

A full battery (cell model 454261) was prepared as follows.

Positive electrode preparation: the cathode materials prepared in the above Examples and Comparative Examples were added to N-methylpyrrolidone (NMP) (a weight ratio of cathode material to NMP is 2.1:1) with conductive carbon black (S.P) and a binder polyvinylidene fluoride (PVDF) at a weight ratio of 94:3:3, respectively, mixed well, and stirred to form a uniform slurry. The slurry was coated on an aluminum foil current collector, dried, and pressed to form an electrode plate.

Negative electrode preparation: the anode artificial graphite, conductive carbon black (S.P), carboxymethyl cellulose (CMC) and a binder (SBR) were added to a sufficient amount of pure water at a weight ratio of 95:1:1:3, mixed, and stirred to form a uniform slurry. The slurry was coated on a copper foil current collector, dried, and pressed to form an electrode plate.

A separator was a PP/PE/PP tri-layer composite film material.

The pressed positive and negative electrode plates were spot-welded with a tab. After the separator was inserted, the material was coiled on a coiler, loaded into a soft package fixture for top and side sealing, and then placed into an oven for roasting. The obtained material was injected with 9 g of the electrolyte in an environment with a relative humidity of less than 1.5%, formed for 48 hours (Zhejiang Hangke LIP-3AHB06 High Temperature Formation System), and then vacuumed and sealed. Among others, the electrolyte is 1 mol/L lithium hexafluorophosphate, with the solvent in the lithium hexafluorophosphate solution being a mixed solvent of dimethyl carbonate (DMC), ethylene carbonate (EC) and diethyl carbonate (DEC) in a mass ratio of 1:1:1.

The drying of samples and the high-temperature test of the battery were performed using a Dongguan Kerui Electromechanical KPBAK-03E-02 efficient vacuum drying oven.

Charge-discharge tests of the lithium-ion battery prepared according to the present invention were performed on a Wuhan LAND Battery Tester as follows. The results were shown in Table 13.

### 1) Capacity test

The prepared lithium-ion battery was connected to a test rack, and a test procedure was started. Setup steps: the battery was set to a test temperature of 25°C, allowed to stand for 4 hours, charged at a constant current of 1C to 4.2V, transferred to a constant voltage of 4.2 V for 0.5 h, allowed to stand for 5 minutes, and then discharged at a constant current of 1C to 3.0V to obtain the capacity under this current and voltage.

### 2) Test of capacity retention rate

The battery subjected to the above capacity test was connected to a test rack, and a test procedure was started. Setup steps: the battery was set to a test temperature of 45°C, allowed to stand for 4 hours, charged at a constant current of 1C to 4.2V, transferred to at a constant voltage of 4.2V for 0.5 h, allowed to stand for 5 minutes, then discharged at a constant current of 1C to a cutoff voltage of 3.0V, allowed to stand for 5 minutes, and repeated the previous steps starting from constant current charging to perform cycle test to obtain the capacity retention rate for different cycles.

### 3) Test of battery thickness swelling rate using a PPG battery thickness gauge

The battery was fully charged to the set voltage of 4.25V, tested for the battery thickness using a PPG battery thickness gauge, and then placed into an incubator at 70°C for 30 days. The battery was removed and tested for the battery thickness at this time using the PPG battery thickness gauge. The battery thickness swelling rate was calculated by the following formula: battery thickness swelling rate = (battery thickness after constant temperature - battery thickness before constant temperature) / battery thickness before constant temperature.

**Table 13. Test results of the performance of the battery**

| Cathode materials in positive electrodes | Capacity (mAh/g) | Capacity retention rate (%) | Thickness swelling rate (%) |
|---|---|---|---|
| | 4.2V, 1C | 4.2V, 45°C@300 times | 4.25V, 70°C for 30 days |
| Example 1 | 204.2 | 87.3 | 28 |
| Example 2 | 203.7 | 86.8 | 26 |
| Example 3 | 198.2 | 95.2 | 25 |
| Example 4 | 194.2 | 92.2 | 23 |
| Example 5 | 199.4 | 94.8 | 24 |
| Example 6 | 202.3 | 81.4 | 32 |
| Example 7 | 201.8 | 78.8 | 87 |
| Comparative Example 1 | 187.2 | 78.0 | 120 |
| Comparative Example 2 | 190.2 | 74.2 | 105 |
| Comparative Example 3 | 189.7 | 80.3 | 152 |

The cathode materials prepared in Examples of the present invention all had a primary particle morphology. It can be seen from Table 12 that the cathode materials prepared in Examples of the present invention had a total free lithium of < 2000 ppm, a specific surface area of 0.8-1.2 m²/g, and a particle size of 2.5-4 µm.

It can be seen from Table 13 that the lithium-ion battery prepared from the double-coated high-nickel cathode material for lithium-ion batteries had a thickness swelling rate of less than 90% after being placed into an incubator at 70°C for 30 days. Compared to Example 4, Comparative Example 1 only used primary wet coating, and the battery had a thickness swelling rate of 120% after being placed into an incubator at 70°C for 30 days, which was much higher than that in Example 4; Comparative Example 2 only used primary dry coating, and the battery had a thickness swelling rate of 105% after being placed into an incubator at 70°C for 30 days, which was much higher than that in Example 4; Comparative Example 3 used a process of primary dry coating followed by water washing and then second dry coating, and had a thickness swelling rate of 152% after being placed into an incubator at 70°C for 30 days, which was also much higher than that in Example 4 and also higher than that in other Examples of the present invention. Furthermore, in Examples 1-6 of the present invention, a strong acid was added to etch the surface in the wet process, and the prepared cathode material was used for preparing a lithium-ion battery with a thickness swelling rate of 23-32% after being placed into an incubator at 70°C for 30 days. Compared to Example 6, the cathode material prepared in Example 7 without adding a strong acid to etch the surface in the wet process was used for preparing a lithium-ion battery with a thickness swelling rate of 87% after being placed into an incubator at 70°C for 30 days, which was nearly 172% higher than that in Example 6.

In summary, the cathode materials prepared in Comparative Example 1 and Comparative Example 2 by primary coating have a high thickness swelling rate and poor gas production performance. The cathode material prepared in Comparative Example 3 by the process of primary dry coating followed by water washing and then second dry coating has a higher thickness swelling rate and decreased gas production performance, although the free lithium content is greatly reduced by water washing. The high-nickel cathode material prepared by the combined process of wet coating and dry coating according to the present invention has an excellent cycle performance and gas production performance while maintaining high capacity. Therefore, the cathode material of the present invention has a high capacity while maintaining good cycle performance and gas production performance, resulting in an excellent overall performance.

The above descriptions are only preferred embodiments of the present invention and are not intended to limit the present invention in any way. Modifications, equivalent replacements and improvements, and the like made within the spirit and principles of the present invention are all required to be included within the protection scope of the present invention.

## Claims

1. A double-coated high-nickel cathode material for lithium-ion batteries, comprising a cathode material substrate, a first coating layer coated on a surface of the cathode material substrate, and a second coating layer coated on a surface of the first coating layer;
wherein the first coating layer and the second coating layer are prepared by successively coating the cathode material substrate with a metal oxide and a boron-containing compound.

2. The double-coated high-nickel cathode material for lithium-ion batteries according to claim 1, wherein the cathode material has a general chemical formula of LiₐNiₓCo_{y}Mn_{z}M_{b}O₂·cA·dB, where 1.00 ≤ a ≤ 1.20, 0.00 < b ≤ 0.01, 0.00 < c ≤ 0.01, 0.00 < d ≤ 0.05, 0.80 ≤ x < 1.00, 0.00 ≤ y < 0.12, 0.00 ≤ z < 0.2, and x + y + z = 1; M is a doping element which is one or a combination of two or more selected from the group consisting of Mg, Ti, Al, Zr, Ba and a rare earth element; A is the first coating layer, and B is the second coating layer.

3. The double-coated high-nickel cathode material for lithium-ion batteries according to claim 2, wherein 1.00 ≤ a ≤ 1.20, 0.001 ≤ b ≤ 0.01, 0.80 ≤ x <1.00, 0.00 ≤ y <0.12, 0.00 ≤ z <0.2, 0.0005 < c ≤ 0.01, 0.001 < d ≤ 0.05, and x + y + z = 1; preferably, 1.02 ≤ a ≤ 1.20, 0.0015 ≤ b ≤ 0.005, 0.80 ≤ x <1.00, 0.00 ≤ y <0.12, 0.00 ≤ z <0.2, 0.0005 < c ≤ 0.01, 0.001 < d ≤ 0.03, and x + y + z = 1.

4. The double-coated high-nickel cathode material for lithium-ion batteries according to claims 2 or 3, wherein the rare earth element is one or a combination of two or more selected from the group consisting of lanthanum, cerium, praseodymium, neodymium, promethium, samarium, yttrium, gadolinium, terbium, dysprosium, holmium, erbium, thulium, ytterbium, lutetium, scandium or europium, preferably yttrium.

5. The double-coated high-nickel cathode material for lithium-ion batteries according to any one of claims 1-4, wherein the first coating layer is formed from a metal oxide; preferably, the metal oxide is selected from one or a combination of two or more selected from the group consisting of Al₂O₃, TiO₂, ZrO₂, MgO and a rare earth oxide; more preferably, the first coating layer is formed by wet coating the metal oxide.

6. The double-coated high-nickel cathode material for lithium-ion batteries according to claim 5, wherein the rare earth oxide is selected from one or a combination of two or more selected from the group consisting of lanthanum oxide, cerium oxide, praseodymium oxide, neodymium oxide, promethium oxide, samarium oxide, yttrium oxide, gadolinium oxide, terbium oxide, dysprosium oxide, holmium oxide, erbium oxide, thulium oxide, ytterbium oxide, lutetium oxide, scandium oxide or europium oxide, preferably yttrium oxide.

7. The double-coated high-nickel cathode material for lithium-ion batteries according to any one of claims 1-6, wherein the second coating layer is formed from a boron-containing compound; preferably, the boron-containing compound is one or a combination of two or more selected from the group consisting of boric acid, lithium borate, lithium metaborate or lithium tetraborate; more preferably, the second coating layer is formed by dry coating the boron-containing compound.

8. The double-coated high-nickel cathode material for lithium-ion batteries according to any one of claims 1-7, wherein the cathode material has a primary particle morphology,
or the cathode material, comprises < 2000 ppm of total free lithium by weight of mass of the cathode material,
or the cathode material has a specific surface area of 0.4-1.5 m²/g; preferably, the cathode material has an average particle size of 2-5 µm.

9. The double-coated high-nickel cathode material for lithium-ion batteries according to any one of claims 1-8, wherein the wet coating comprises a step of mixing a reagent for wet coating with the cathode material substrate and then sintering; preferably, the reagent for wet coating comprises a metal oxide and water, preferably further comprising a strong acid.

10. A preparation method for the double-coated high-nickel cathode material for lithium-ion batteries according to any one of claims 1-9, comprising the steps of:
(1) mixing a lithium source compound, a cathode material precursor and an M source compound to obtain a mixture;
(2) performing first calcination on the mixture prepared in step (1) to obtain a cathode material substrate;
(3) performing wet coating on the cathode material substrate prepared in step (2) to obtain a cathode material coated with a first coating layer;
(4) performing dry coating on the cathode material coated with the first coating layer prepared in step (3) to obtain the double-coated high-nickel cathode material for lithium-ion batteries.

11. The preparation method according to claim 10, wherein an elemental molar ratio of the lithium source compound, the cathode material precursor and the M source compound, Li:(Ni+Co+Mn):M, is (1.0-1.2):1.0:(0.00-0.01).

12. The preparation method according to claims 10 or 11, wherein the wet coating comprises a step of mixing the cathode material substrate, water, a strong acid and a metal oxide and then performing second sintering;
preferably, a mass ratio of the cathode material substrate to the metal oxide is 1.0:(0.0005-0.005); preferably, a mass ratio of the cathode material substrate to water is 1:(1.0-2.0); more preferably, a mass ratio of the cathode material substrate to the strong acid is 1:(0.001-0.01);
more preferably, a temperature of the second sintering is 600-800°C, and a preferred sintering time is 6-20 h; further preferably, the steps of filtering and drying were further comprised after the mixing.

13. The preparation method according to any one of claims 10-12, wherein the dry coating comprises a step of mixing the cathode material coated with the first coating layer prepared in step (3) with a boron-containing compound and then performing third sintering;
preferably, a mass ratio of the cathode material coated with the first coating layer to the boron-containing compound is 1.0:(0.002-0.02);
more preferably, a temperature of the third sintering is 250-450°C, and a preferred sintering time is 3-15 h.

14. A low-gas production and high-nickel lithium-ion battery, wherein the low-gas production and high-nickel lithium-ion battery comprises the cathode material according to any one of claims 1-9 or a cathode material prepared by the preparation method according to any one of claims 10-13,
preferably, the low-gas production and high-nickel lithium-ion battery has a first discharge capacity of 190-210 mAh/g under a 4.2V, 1C charge-discharge condition,
more preferably, the low-gas production and high-nickel lithium-ion battery has a thickness swelling rate of less than or equal to 32% after being stored at 70°C for 30 days.

15. Use of the cathode material according to any one of claims 1-9, a cathode material prepared by the preparation method according to any one of claims 10-13, or the low-gas production and high-nickel lithium-ion battery according to claim 14 in the field of digital products, electric vehicles or energy storage.
